# EUROPEAN PATENT SPECIFICATION

(11) **EP 1 868 943 B1**
(45) Date of publication and mention of the grant of the patent: **06.06.2012**
(21) Application number: 06749193.6
(22) Date of filing: 04.04.2006
(51) Int. Cl.: C01G 23/02, B01D 53/02, B01D 53/48, B01D 53/50, B01D 53/62, B01D 53/68

(54) **PROCESS FOR PURIFYING TITANIUM CHLORIDE-CONTAINING FEEDSTOCK**
VERFAHREN ZUR REINIGUNG VON TITANIUMCHLORIDHALTIGEM ROHMATERIAL
PROCEDE POUR PURIFIER UNE CHARGE D'ALIMENTATION CONTENANT DU CHLORURE DE TITANE

(30) Priority: 11.04.2005 US 103168
(43) Date of publication of application: 26.12.2007
(73) Proprietor: E.I. DU PONT DE NEMOURS AND COMPANY, Wilmington, DE 19898 (US)
(72) Inventor: CRONIN, James, Timothy, Townsend, DE 19734 (US); HELBERG, Lisa, Edith, Middletown, DE 19709 (US)
(74) Representative: Towler, Philip Dean
(86) International application number: PCT/US2006/012397
(87) International publication number: WO 2006/110383

(56) References cited:
- US-A- 3 939 244
- US-A- 4 111 034
- US-A- 4 297 131
- US-B1- 6 355 094
- EFREMOV A.A. ET AL.: 'Adsorption Purification of Titanium Tetrachloride' KHIM. PROM. vol. 45, no. 10, 1969, pages 758 - 763, XP008129856

## Description

### BACKGROUND OF THE DISCLOSURE

### Field of the Disclosure

The disclosure relates to a process for purifying a titanium chloride-containing feedstock using activated carbon by monitoring the purified product for a tracker species as an indicator of impurities in the purified product. More particularly, the disclosure relates to a process for purifying a titanium tetrachloride feedstock by monitoring at least one tracker species selected from the group consisting of phosgene, carbonyl sulfide, sulfur dioxide, carbon disulfide, thionyl chloride, SO₂Cl₂, sulfur chloride, carbon dioxide, hydrochloric acid and combinations thereof as an indicator of arsenic concentration.

### Description of the Related Art

Titanium tetrachloride obtained by reacting titanium ore with chlorine can contain arsenic trichloride resulting from arsenic as an impurity of the ore. Batch and continuous processes for using activated carbon to remove arsenic trichloride have been described, see Efremov, A.A. et al., Khim. Prom, 1969, 45(2), 132-4. Also described in Efremov, A.A., et al., Vysokochistye Veshchestva, 1991, 1(167-72) is regenerating the activated carbon. In the foregoing references, the change in arsenic content was analyzed by the radioactive indicator method using the radioactive isotope As⁷⁶. This method is not suitable for commercial processes or a full scale production unit since radioactive As⁷⁶ must be added to the titanium tetrachloride.

As the titanium chloride feedstock flows through the carbon bed, the arsenic trichloride is adsorbed by the carbon until a certain capacity limitation is reached for a given product quality specification. When the arsenic concentration in the product has risen above the desired limit, it is said to have broken through the bed. Once breakthrough occurs, the bed can be regenerated and purification can be resumed. Running the bed to breakthrough, rather than stopping purification before the limit, is economically beneficial for minimizing bed regeneration and consequent process downtime.

There are no known methods for directly measuring, in real-time, low ppm concentrations of the (elemental) antimony, arsenic, and tin in a neat commercially available titanium tetrachloride solution. Neat titanium tetrachloride solutions may be converted into an aqueous or oxide form to allow for direct arsenic detection using wet titration methods, atomic absorption spectroscopy (AA), graphite furnace atomic absorption spectroscopy (GFAA), inductively coupled plasma spectroscopy (ICP), or X-ray fluorescence spectroscopy (XRF). The method required will depend on the detection limit needed. One method by atomic absorption spectroscopy is described by Broughton, et.al. in the Proceedings of the Analytical Division of the Chemical Society, 1977, 14(5), 112. Each of these methods are performed on a "grab" sample basis to determine when arsenic breakthrough has occurred, and each is a time consuming analytical method that can take several hours to complete. Unless the purification process is discontinued while running the analysis, the operator runs the risk of contaminating the product titanium tetrachloride with residual arsenic. To avoid this risk, the operator can try to predict the amount of time before breakthrough and run the purification process for that amount of time then regenerate the bed. However, with this approach, the production capacity of the activated bed cannot be optimized. This approach also does not take into account changes in bed capacity that could stem from any of the following conditions: moisture contamination, variations in feedstock, or physical flow characteristics, such as channeling.

### SUMMARY OF THE DISCLOSURE

Activated carbon removes phosgene, carbonyl sulfide, sulfur dioxide, carbon disulfide, thionyl chloride, SO₂Cl₂, sulfur chloride, carbon dioxide and hydrochloric acid from titanium tetrachloride. Unlike arsenic, these species can be directly and rapidly measured by well-known techniques in neat titanium tetrachloride solution. It has been discovered that activated carbon will remove these species in the same pattern as certain impurities contained in the titanium chloride-containing feedstock, such as arsenic. Thus, by monitoring the presence of at least one of these tracker species, the impurity level can be closely monitored, allowing an operator to run the purification process more efficiently. Typical impurities in the process of this disclosure include arsenic, vanadium and antimony and compounds containing any of the foregoing elements.

The disclosure is directed to a process for purifying a titanium chloride-containing feedstock using an activated carbon bed, comprising:
(a) providing the titanium chloride-containing feedstock comprising an impurity and at least one tracker species selected from the group consisting of phosgene, carbonyl sulfide, sulfur dioxide, carbon disulfide, thionyl chloride, sulfur chloride, SO₂Cl₂, carbon dioxide, and hydrochloric acid and combinations thereof;
(b) feeding the titanium chloride-containing feedstock to the activated carbon bed;
(c) contacting the titanium chloride-containing feedstock with the activated carbon by flowing the feedstock through the activated carbon bed to remove at least a portion of both the tracker species and the impurity from the feedstock to form a treated product;
(d) continuing the flow of the titanium chloride-containing feedstock at least until the tracker species is detected in the treated product ; and
(e) regenerating the activated carbon bed.

### BRIEF DESCRIPTION OF THE DRAWINGS

Fig. 1 is a simplified schematic flow diagram of one process for carrying out the disclosure.
Figs. 2 to 4 are plots of the adsorbance of various tracker species over time which relates to the concentration of arsenic (ppm) in the titanium tetrachloride feedstock of Examples 1-3.

### DETAILED DESCRIPTION OF THE DISCLOSURE

The titanium chloride-containing feedstock useful in this disclosure is anhydrous. The tracker species which have been found to be removed by activated carbon in a pattern which can be used to monitor the removal of certain impurities are phosgene, carbonyl sulfide, sulfur dioxide, carbon disulfide, thionyl chloride, SO₂Cl₂, sulfur chloride, carbon dioxide or hydrochloric acid. One or more of these tracker species can be present in the feedstock. The presence or absence of a tracker species can depend upon the source of the feedstock. Direct analytical techniques for these tracker species in titanium tetrachloride are well known and include, without limitation, infrared spectroscopy, Raman and gas chromatography, especially packed column gas chromatography. Fourier transform infrared (FTIR) is a typical infrared spectroscopic technique that can be used in the process of this disclosure. Rand, M.J., Reimert, L.J.; Journal of the Electrochemical Society, 111, 434 (1964) and Johannesen, R. B., Journal of Research of the National Bureau of Standards, 53 (4), 197 (1954) describe the use of FTIR for measuring impurities of this type in anhydrous TiCl₄. Agliulov, N., et. al., Trudy po Khimii i Khimicheskoi Teknologii (1973), (3), 66-8; Agliulov, N. et. at., Metody Poluch. Anal. Veshchestv Osoboi Chist,. Tr. Vses. Knof. (1970); and Vranti Piscou, D., et. al., Journal of Chromatographic Science (1971), 9(8), 499-501 describe analysis methods by gas or liquid chromotography.

Impurities that can be removed by the process of this disclosure include arsenic and arsenic-containing compounds such as arsenic trichloride or any hydrated forms of arsenic, antimony and antimony-containing compounds such as SbCl₅ or any hydrated forms of antimony, vanadium and vanadium-containing compounds such as vanadium oxytrichloride and tin and tin-containing compounds such as tin tetrachloride.

By the term "purifying" it is meant that the concentration of the impurities in the titanium chloride-containing feedstock is at least significantly lowered if not reduced to a level below that which can be detected by known analytical techniques. Additionally, the impurities can be lowered to an operator specified concentration. The titanium chloride-containing feedstock is referred to as treated or purified after it has contacted the activated carbon even though it may contain residual impurities. The unpurified titanium chloride-containing feedstock refers to the feedstock before it has contacted the activated carbon, thus, the unpurified feedstock can contain the maximum concentration of impurities and tracker species.

Typically the titanium chloride feedstock contains less than about 50 ppm arsenic, typically 30 ppm or less, more typically 10 ppm or less and the process of this disclosure can purify the feedstock to a concentration of less than about 3 ppm arsenic, typically less than 1 ppm arsenic. Typically the feedstock can contain over 100 ppm of one or more tracker species. However, the amount of arsenic and tracker species can vary depending upon the composition of the feedstock and the source of the feedstock.

The feedstock is usually condensed into the liquid phase before the purification step and the tracker species are dissolved gases or other condensed phase species. The process may also be operated in the vapor phase for tracker species that can be removed in the vapor phase such as SO₂.

A variety of activated carbon products are well known and can be used in this disclosure. Any source of activated carbon may be used such as those derived from bituminous coal, lignite coal, hard or soft wood, or coconut fibers. Some examples are Calgon CAL or F-300 carbon, Norit Darco or KB carbon, Westvaco Nuchar WV-B, or BAU-A carbon. The order of adsorption, however, may change depending on the type of activated carbon. For example, it has been found that with the activated carbon of the examples set forth herein below (Calgon CAL 12 x 40 granular carbon), CO₂ and HCl came out much earlier than the arsenic and before the COS. As such, it is believed that CO₂ and HCl may be less effective as tracker species. However, a different type of activated carbon may enable the CO₂ and HCl to perform more effectively.

The trace impurities contained in the titanium tetrachloride feedstock can change depending on the processing conditions and raw materials used to produce the material. For example, it is well known that CO₂ is produced in the carbon chlorination reaction, usually in the highest concentration relative to the other gases. However, the amount of CO₂ contained in the liquid TiCl₄ feedstock will depend on the condensation conditions used to capture the metal chloride vapors and other processing steps. These conditions could cause the concentrations to vary from over several hundred ppm to less than 10 ppm CO₂ in the feedstock, typically about 500 to 700 ppm to less than 10 ppm. The same conditions will effect all of the other dissolved gas species based on their solubility in TiCl₄ and vapor pressures.

The activated carbons of different types may also vary greatly in their adsorption profiles. The various types and applications of commercially available activated carbons are well know as are the wide variety of starting materials used for their manufacture. Activated carbons designed for liquid phase separations will have differing affinities for dissolved gases in the liquid TiCl₄ feedstock. For example, a specific activated carbon could be employed where all of the dissolved gases could be used as leading indicators for breakthrough of the desired species.

Depending upon the choice of tracker species, the presence of the tracker species in the purified product can be used to indicate the moment prior to breakthrough of the impurity, breakthrough of the impurity, or exhaustion of the carbon bed.

In one embodiment of the disclosure, the concentration of the tracker species in the activated carbon-treated product relative to the concentration of the tracker species in the feedstock can be used to indicate the moment prior to impurity breakthrough, the impurity breakthrough point, or exhaustion of the carbon bed.

When the carbon bed is exhausted; that is, when the carbon bed is no longer capable of removing the impurities, the carbon bed can be regenerated. Techniques for regenerating an activated carbon bed are well known. Typically, the flow of feedstock to the bed is discontinued and the bed is regenerated by heating to a temperature above the boiling point of the feedstock, typically 140°C or higher, more typically at least about 150° C, even more typically from about 185° C to about 250° C. The exact regeneration temperature usually depends on the nature of the carbon and the impurities. During regeneration the bed is usually contacted with a stream of dry inert gas such as nitrogen or argon. The gas can be passed through the bed countercurrent to the flow direction of the feedstock.

The process of this disclosure facilitates starting the regeneration process because monitoring a tracker species can inform an operator of the bed condition and when regenerating the bed is appropriate.

While the process of this disclosure can be operated in batch mode, it is especially useful for continuous mode operation. In continuous mode operation, an on-line analyzer is employed.

In one embodiment of the disclosure, the choice of tracker species depends upon the impurity level to monitor. It has been found that certain tracker species, such as carbonyl sulfide, function as leading indicators because when they are detected in the purified product the arsenic concentration has just begun to increase. It has also been found that certain species, such as phosgene and carbon disulfide, can function as tailing indicators because when one of these tracker species is detected in the purified product, it was found that the impurity concentration in the purified product started to increase above the baseline purity concentration level or that the impurity concentration in the product is reaching or has reached the impurity level of the feedstock. Sulfur dioxide is also a typical example of a useful tailing indicator. It has been found that when sulfur dioxide is detected in the purified product, the arsenic concentration is close to or has reached the concentration of the arsenic in the feed. It has been found that HCl and COS can function as tailing indicators useful for tracking the tin concentration. Which species are capable of functioning as leading and tailing indicators can depend upon the type of activated carbon employed and how it might impact the removal order. The choice of tracker species and which species will function as a leading or a tailing indicator can also, of course, depend on what tracker species are present in the unpurified feedstock.

The leading indicator can be used when one carbon bed is employed. If more than one carbon bed is employed, the tailing indicator can be useful to measure prior to the last bed.

The amount of impurity in the activated carbon-treated product starts to increase when the concentration of the leading indicator in the product reaches a concentration of about 50% or greater, preferably about 60% or greater, even more preferably about 85% or greater than the concentration of the leading indicator of the feedstock. However, the concentration amount that starts to indicate breakthrough could be as low as the detection limit of the analytical technique employed. Thus, a leading indicator concentration could be as low as 10% or even lower depending upon the detection sensitivity of the analytical technique. Tracker species concentration can be measured by absorbance units which are determined by the procedure described herein below or in a direct concentration basis such as parts per million. It is not necessary to know the absolute value of the concentration of the tracker species as long as the tracking relationship is understood. The exact percent concentration of the leading indicator in the product relative to the amount in the feedstock will vary depending upon the type of tracker species employed, as well as the activated carbon type and other impurity profiles.

When the tailing indicator in the product reaches a concentration of about 1% or greater, preferably about 2% or greater, even more preferably about 5% or greater than the concentration of the tailing indicator in the feedstock it has been found that the impurity, specifically arsenic, has exceeded 1 ppm. Additionally, the tailing indicator in the product reaching a concentration of about 1% or greater, preferably about 2% or greater, even more preferably about 5% or greater than the concentration of the tailing indicator in the feedstock may be used to indicate that the carbon bed has been used to exhaustion. Tracker species concentration can be measured by absorbance units which are determined by the procedure described herein below or in a direct concentration basis such as parts per million. It is not necessary to know the absolute value of the concentration of the tracker species as long as the tracking relationship is understood. The exact percent concentration of the tailing indicator in the product relative to the amount in the feedstock will vary depending upon the type of tracker species employed, as well as the activated carbon type and other impurity profiles.

In another embodiment of the disclosure, the desorption of the tracker species can be used as an indicator of unacceptable impurity levels in the activated carbon-treated product. For example, in the case of carbonyl sulfide, it has been found that when the carbonyl sulfide saturates the activated carbon bed it can be displaced by another compound which becomes adsorbed onto the carbon in place of carbonyl sulfide causing the concentration of carbonyl sulfide in the treated product to exceed the carbonyl sulfide concentration of the feedstock for a period of time. After desorption of the carbonyl sulfide, the concentration of carbonyl sulfide in the product will reach equilibrium.

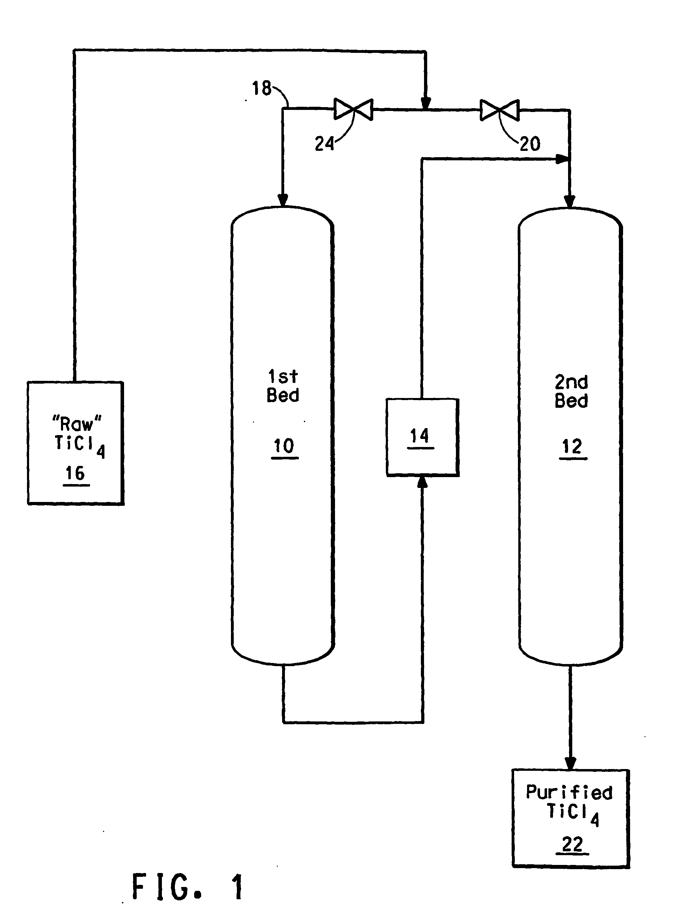

Fig.1 shows one embodiment of the disclosure in which a plurality of carbon beds are employed. Fig. 1 shows a first carbon bed 10 and a second carbon bed 12. The first carbon bed can be the main bed for removing a majority of the impurities and the second carbon bed can be the polishing bed for removing residual impurities. An on-line analyzer such as an FTIR analyzer 14 is located between the first bed and the second bed. In the process of this disclosure, the titanium chloride-containing feedstock is withdrawn from a vessel 16 and introduced to the first bed 10 via line 18. Valve 20 is closed so that the feedstock does not enter the second bed. The feedstock flows, typically by gravity, through the first bed and after it is withdrawn from the first bed it is passed through the on-line analyzer 14 and into the second bed 12.

The on-line analyzer may also be used in a sample loop. In a sample loop, a minor fraction of the flow from the first bed is separated, passed through the analyzer and then returned to join the flow to the second bed. The product of the first bed flows, typically by gravity, through the second bed and is withdrawn from the second bed and passed into storage tank 22.

Referring again to Fig. 1, if the results of the on-line analyzer indicate a need for regenerating the first bed 10, valve 24 is closed and the feed to the first bed is discontinued for regenerating the first bed. When valve 24 is closed, valve 20 can be opened to divert the flow of unpurified feedstock to the second bed. The second bed can then function as the main bed to remove the impurities provided that the second bed has adequate adsorption capability. After the first bed is regenerated, valve 20 is closed and valve 24 is opened to resume normal operation or the original roles of the beds may be reversed with the first bed now serving as the polishing bed for the second bed. When the second bed is to be regenerated, the titanium chloride-containing feedstock is withdrawn from the first bed and diverted to the storage tank 22 after it is passed through the on-line analyzer.

The process of this disclosure can be a process for controlling purification of titanium chloride-containing feedstock because it allows the capacity of the activated carbon bed to be optimized. The discovery of tracker species which pattern the concentration of arsenic trichloride is beneficial as a control scheme for determining when the arsenic trichloride has broken through the bed. The number of bed regenerations can be minimized since the process can be closely controlled to avoid regenerating the bed prematurely. The presence of one or more tracker species in the purified product allows the carbon to adsorb the maximum amount of impurities before regenerating the bed without risking undesired residual impurities in the purified product.

The titanium tetrachloride product of the process described herein can be used in any application for which titanium tetrachloride is useful. The titanium tetrachloride can be used as a starting material for making titanium dioxide and derivatives thereof especially as a feedstream for the well-known chlorination and oxidation processes for making titanium dioxide.

Titanium dioxide is useful in compounding; extrusion of sheets, films and shapes; pultrusion; coextrusion; ram extrusion; spinning; blown film; injection molding; insert molding; isostatic molding; compression molding; rotomolding; thermoforming; sputter coating; lamination; wire coating; calendaring; welding; powder coating; sintering; cosmetics; and catalysts.

Titanium dioxide can be suitable as a pigment. Alternatively, titanium dioxide can be in the nano-size range (average particle diameter less than 100 nm), which is usually translucent or transparent.

Where a range of numerical values is recited herein, unless otherwise stated, the range is intended to include the endpoints thereof, and all integers and fractions within the range. It is not intended that the scope of the disclosure be limited to the specific values recited when defining a range.

### EXAMPLES

For each of the Examples, a 1" diameter and 24" deep packed carbon bed was used. Calgon CAL 12x40 granular carbon was used in all of the Examples. The TiCl₄ feedstock was flowed through the static bed at a rate of 10 mL/min. To measure the tracker species, an FTIR was used with a 1" cell pathlength. The measurements were either done on a grab sample basis or continuous basis by flowing the TiCl₄ through the cell.

### Test Procedure Used in Examples

Infrared Procedure to Generate Absorbance Units vs. Time. Infrared spectra were collected using a Fourier transform infrared (FTIR) device with a 1 inch flow-through cell and Kbr windows, 4cm-1 resolution and 1024 scans. The background spectrum was of the flow-through cell filled with nitrogen. Each of the spectra collected throughout the experiment was examined for the presence of the tracker species.

| Tracker Species | Peak Location (cm⁻¹) |
|---|---|
| CO₂ | 3691 |
| COS | 2042 |
| COCl₂ | 1810 |
| CS₂ | 1517 |
| SO₂ | 1342 |

The absorbance of each of the tracker species can be measured simply by measuring the absorbance of the peak with respect to the baseline. In the case of SO₂, the presence of TiOCl₂ is accounted for by spectral subtraction. The absorbance of each compound is then plotted vs time to create a profile. Absorbance units (au) are a dimensionless unit of measurement well-known in the FTIR art.

### Example 1

In this example, the tracker species concentration in the product was measured on a continuous basis using an in-line analyzer. A sample of anhydrous titanium tetrachloride containing 5 ppm arsenic on a titanium tetrachloride basis was used in this Example 1. The feed was also measured by FTIR to contain 0.588 absorbance units (au) of COS and 0.144 au of COCl₂. The titanium tetrachloride was introduced into the top of the column and allowed to flow by gravity through the column. The titanium tetrachloride collected at the bottom of the column was passed through an FTIR analyzer that analyzed for the presence of the following two tracker species: phosgene and carbonyl sulfide.

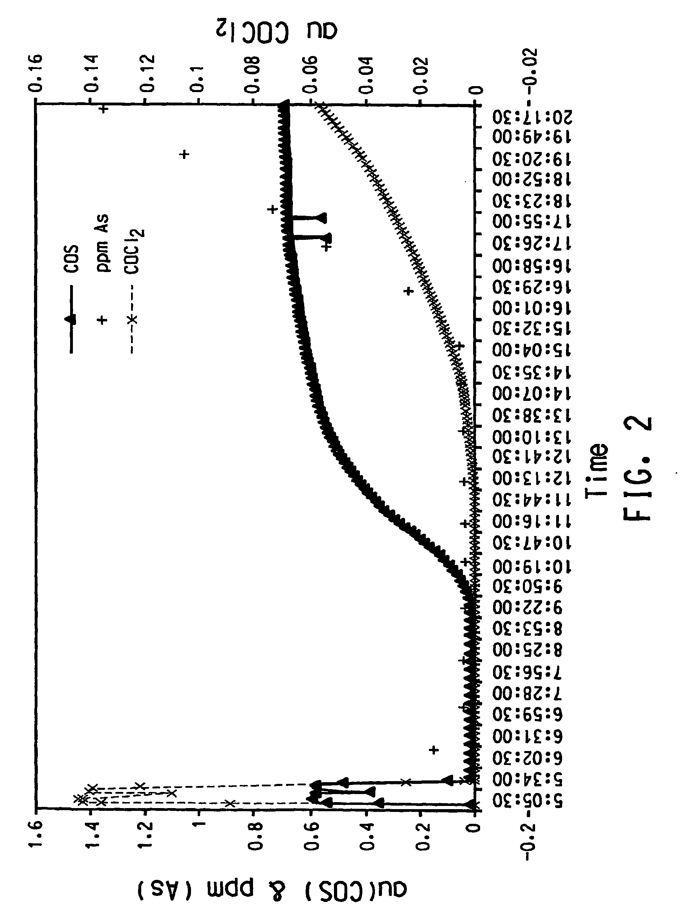

Figure 2 is a plot of absorbance units for each of the two tracker species that shows how the tracker species pattern the concentration of arsenic in the product. Figure 2 also shows the concentration of tracker species in the feedstock when the feed was passed through the FTIR before the start of the experiment; however, the concentration of feedstock arsenic is not shown.

Table 1 shows the arsenic content in ppm of 15 titanium tetrachloride samples, which are representative of the arsenic trichloride content of several samples measured at various times during the test. The absorbance units for carbonyl sulfide and phosgene are also reported in Table 1.

**Table 1**

| Sample No. | Time | As, ppm | COS, au | COCl₂, au |
|---|---|---|---|---|
| 0 | 0:00 | 5.00 | 0.588 | 0.144 |
| 1 | 6:25 | <0.25 | 0.001 | 0 |
| 2 | 7:25 | <0.25 | 0.001 | 0 |
| 3 | 8:25 | <0.25 | 0.001 | 0 |
| 4 | 9:25 | <0.25 | 0.015 | 0 |
| 5 | 10:25 | <0.25 | 0.125 | 0 |
| 6 | 11:25 | <0.25 | 0.289 | 0 |
| 7 | 12:25 | <0.25 | 0.414 | 0 |
| 8 | 13:25 | <0.25 | 0.511 | 0.001 |
| 9 | 14:25 | <0.25 | 0.570 | 0.005 |
| 10 | 15:25 | <0.25 | 0.604 | 0.010 |
| 11 | 16:25 | 0.25 | 0.632 | 0.017 |
| 12 | 17:25 | 0.53 | 0.653 | 0.025 |
| 13 | 18:25 | 0.72 | 0.664 | 0.034 |
| 14 | 19:25 | 1.06 | 0.670 | 0.044 |
| 15 | 20:25 | 1.37 | 0.682 | 0.055 |

The data of Table 1 show that as COS in the product begins to reach about 96% of the amount of COS in the feed, the arsenic concentration of the product has started to increase. The data of Table 1 also show desorption of COS as indicated by a concentration of COS in the product which exceeds the concentration of COS in the feedstock. The desorption of COS also served to indicate when the arsenic level started to increase. It is expected that the COS concentration in the product would go back to the level in the feed overtime. The data of Table 1 also shows that when the concentration of COCl₂ reached a level of about 30% of the concentration of COCl₂ concentration of the feedstock the arsenic concentration in the product had exceeded 1 ppm. Fig. 2 is a plot of the data upon which Table 1 is based.

### Example 2

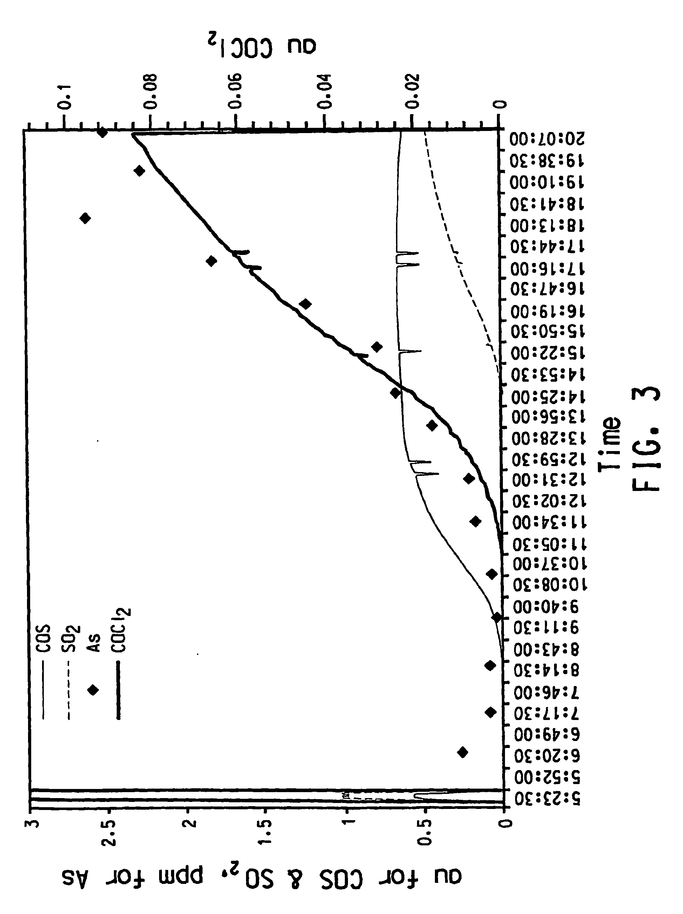

In this example, the tracker species concentration in the product was measured on a continuous basis using an in-line analyzer. A sample of anhydrous titanium tetrachloride containing 4 ppm arsenic on a titanium tetrachloride basis was used in this Example 2. The feed was also measured by FTIR to contain 0.585 au of COS, 0.147 au of COCl₂, and 1.027 au of SO₂. The titanium tetrachloride was introduced into the top of the column and allowed to flow by gravity through the column. The titanium tetrachloride collected at the bottom of the column was passed through an FTIR analyzer that analyzed for the presence of the following three tracker species: phosgene, carbonyl sulfide, and sulfur dioxide. Figure 3 is a plot of absorbance units for each of the three tracker species that shows how the tracker species pattern the concentration of arsenic. Figure 3 also shows the concentration of tracker species in the feedstock when the feed was passed through the FTIR before the start of the experiment; however, the concentration of feedstock arsenic is not shown.

Table 2 shows the arsenic content in ppm of 15 titanium tetrachloride samples, which are representative of the arsenic trichloride content of several samples measured at various times during the test. The absorbance units for carbonyl sulfide, phosgene, and sulfur dioxide are also reported in Table 2.

**Table 2**

| Sample No. | Time | As, ppm | COS, au | COCl₂, au | SO₂, au |
|---|---|---|---|---|---|
| 0 | 0:00 | 4.00 | 0.585 | 0.147 | 1.027 |
| 1 | 6:15 | <0.25 | 0.002 | 0 | 0 |
| 2 | 7:15 | <0.25 | 0.001 | 0 | 0 |
| 3 | 8:15 | <0.25 | 0.004 | 0 | 0 |
| 4 | 9:15 | <0.25 | 0.052 | 0 | 0 |
| 5 | 10:15 | <0.25 | 0.238 | 0 | 0 |
| 6 | 11:15 | <0.25 | 0.408 | 0.000 | 0 |
| 7 | 12:15 | <0.25 | 0.526 | 0.004 | 0 |
| 8 | 13:15 | 0.44 | 0.589 | 0.012 | 0 |
| 9 | 14:15 | 0.65 | 0.625 | 0.022 | 0 |
| 10 | 15:15 | 0.79 | 0.643 | 0.035 | 0.042 |
| 11 | 16:15 | 1.24 | 0.647 | 0.048 | 0.129 |
| 12 | 17:15 | 1.78 | 0.643 | 0.059 | 0.224 |
| 13 | 18:15 | 2.59 | 0.636 | 0.069 | 0.315 |
| 14 | 19:15 | 2.27 | 0.622 | 0.078 | 0.394 |
| 15 | 20:15 | 2.49 | 0.613 | 0.085 | 0.458 |

The data of Table 2 show that when the COS reaches a concentration of about 89% of the amount of COS in the feed, the arsenic level started to increase. Moreover, Table 2 shows desorption of COS as indicated by a concentration of COS in the product exceeding the concentration of COS in the feedstock. The desorption of COS also served to indicate when the arsenic level started to increase. As expected the COS concentration in the product reached a maximum of 0.647 au (see Sample 11) then started to decrease as shown in Sample No. 15 which contained 0.613 au COS. When the COCl₂ concentration was about 32% of the COCl₂ concentration of the feed, the arsenic level in the product had exceeded 1 ppm. When the SO₂ level in the product was about 8% of the SO₂ concentration of the feed, it indicated that the concentration of arsenic in the product had exceeded 1 ppm. Fig. 3 is a plot of the data upon which Table 2 is based.

### Example 3

In this Example 3, the tracker species concentration was measured in batch samples which were withdrawn from the product and tested offline.

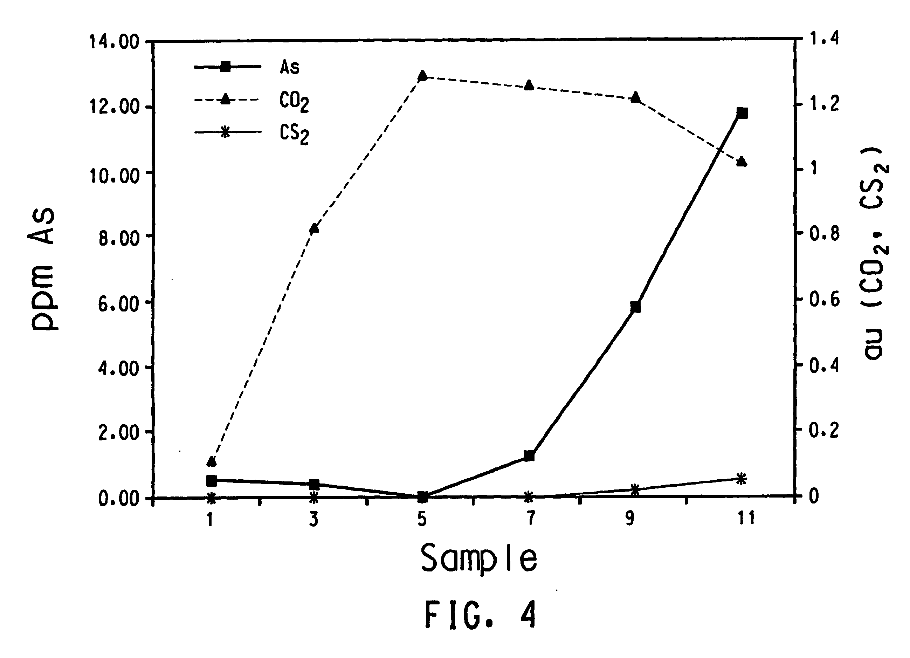

A sample of anhydrous titanium tetrachloride containing 33 ppm As on a titanium tetrachloride basis was used in this Example. The feed was also measured by FTIR to contain 1.64 au of CO₂ and 0.853 au of CS₂. The titanium tetrachloride was introduced into the top of the column and allowed to flow by gravity through the column. The titanium tetrachloride was collected at the bottom of the column. The time averaged product samples were analyzed using an FTIR spectrometer that analyzed for the presence of the following two tracker species: carbon dioxide and carbon disulfide. Figure 4 is a plot of absorbance units for each of the two tracker species that shows how the tracker species pattern the concentration of arsenic trichloride.

Table 3 shows the arsenic content in ppm of 6 titanium tetrachloride samples, which are representative of the arsenic content of several samples measured at various times during the test. The absorbance units for carbonyl dioxide and carbon disulfide are also reported in Table 3.

**Table 3**

| Sample No. | As, ppm | CO₂, au | CS₂, au |
|---|---|---|---|
| 0 | 33.00 | 1.640 | 0.853 |
| 1 | 0.39 | 0.097 | 0 |
| 2 | 0.28 | 0.817 | 0 |
| 3 | <0.25 | 1.289 | 0 |
| 4 | 1.15 | 1.257 | 0 |
| 5 | 5.81 | 1.218 | 0.012 |
| 6 | 11.70 | 1.02 | 0.056 |

The data of Table 3 show that when the CO₂ concentration reached about 76% of the concentration in the feedstock the arsenic content of the feed was above 1 ppm. When the CS₂ concentration reached about 1.4% of the concentration of the feedstock the arsenic level in the product was well about 1 ppm. In the batch system of this Example 3, CO₂ loss was experienced, a problem not experienced in the continuous closed-loop processes described in Examples 1 and 2.

Fig. 4 is a plot of the data upon which Table 3 is based.

### Example 4

In this example, the tracker species concentration in the product was measured on a continuous basis using an in-line analyzer. A sample of anhydrous titanium tetrachloride containing 336 ppm tin on a titanium tetrachloride basis was used in this Example 1. The feed was also measured by FTIR to contain 0.0468 absorbance units (au) of CO₂, 0.842 au HCl and 0.527 au of COS. The titanium tetrachloride was introduced into the top of the column and allowed to flow by gravity through the column. The titanium tetrachloride collected at the bottom of the column was passed through an FTIR analyzer that analyzed for the presence of the following three tracker species: carbon dioxide, hydrochloric acid, and carbonyl sulfide.

Table 4 shows the tin content in ppm of 5 titanium tetrachloride samples, which are representative of the tin tetrachloride content of several samples measured at various times during the test. The absorbance units for carbon dioxide, hydrochloric acid and carbonyl sulfide are also reported in Table 4.

**Table 4**

| Sample No. | Time | Sn, ppm | CO₂, au | HCl, au | COS, au |
|---|---|---|---|---|---|
| 0 | 0:00 | 336 | 0.0468 | 0.842 | 0.527 |
| 1 | 10:10 | 13 | 0.002086 | 0.026685 | 0.012224 |
| 2 | 11:10 | 13 | 0.004334 | 0.016741 | 0.009318 |
| 3 | 12:10 | 102 | 0.026165 | 0.013352 | 0.008152 |
| 4 | 13:10 | 223 | 0.051906 | 0.013263 | 0.008824 |
| 5 | 14:10 | 299 | 0.065604 | 0.094043 | 0.042198 |

The data of Table 4 show that as CO₂ in the product reached a value equal to the starting concentration and then started to desorb into the product, the tin concentration of the product reached a value approximately equal to the starting concentration. As the experiment continues the CO₂ concentrations in the product are expected to return to equilibrium values.

The data of Table 4 show that the HCl and COS concentrations came down slightly from their values at the start of the run, comparing Sample Nos. 1 and 2. Samples 2, 3 and 4 show that the HCl and COS concentration were at a low value that remained at a steady state for a period of time. During this time the Sn concentration in the product continued to increase as shown by the Sn concentration in samples 2, 3 and 4. At the point where the Sn concentration in the product was 223 ppm, greater than 60% of its starting concentration in the feed, the concentrations of HCl and COS began to rise as shown by the concentrations of HCl and COS in Samples 4 and 5. By the time each of these species reached concentrations above 10% of their starting concentrations, see Sample No. 5, the Sn concentration in the product approached equilibrium with the starting concentration.

The description of illustrative and preferred embodiments of the present disclosure is not intended to limit the scope of the disclosure.

## Claims

1. A process for purifying a titanium chloride-containing feedstock using an activated carbon bed, comprising:
(a) providing the titanium chloride-containing feedstock comprising an impurity and at least one tracker species selected from the group consisting of phosgene, carbonyl sulfide, sulfur dioxide, carbon disulfide, thionyl chloride, sulfur chloride, SO₂Cl₂, carbon dioxide, and hydrochloric acid and combinations thereof;
(b) feeding the titanium chloride-containing feedstock to the activated carbon bed;
(c) contacting the titanium chloride-containing feedstock with the activated carbon by flowing the feedstock through the activated carbon bed to remove at least a portion of both the tracker species and the impurity from the feedstock to form a treated product;
(d) continuing the flow of the titanium chloride-containing feedstock at least until the tracker species is detected in the treated product; and
(e) regenerating the activated carbon bed.

2. The process of claim 1 in which the titanium chloride-containing feedstock is derived from a reaction of titanium dioxide ore and chlorine to form a gaseous product which is liquefied.

3. The process of claim 1 in which the tracker species is detected by infrared spectroscopy.

4. The process of claim 1 in which the tracker species is detected by FTIR.

5. The process of claim 1 in which the impurity comprises arsenic.

6. The process of claim 1 in which the titanium chloride-containing feedstock contains less than about 10 ppm arsenic or 25 ppm arsenic trichloride.

7. The process of claim 1 in which the treated product contains less than about 1 ppm arsenic or less than about 2.4 ppm arsenic trichloride.

8. The process of claim 1 in which the flow of titanium tetrachloride-containing feedstock is continued until the desorption of the tracker species.

9. The process of claim 1 in which the flow of titanium tetrachloride-containing feedstock is continued until the level of the tracker species in the treated product is 50% or greater than the level of the tracker species in the feedstock.

10. The process of claim 1 in which the flow of titanium tetrachloride-containing feedstock is continued until the level of the tracker species in the treated product is 1 % or greater than the level of the tracker species in the feedstock.

11. The process of claim 1 in which the activated carbon bed is regenerated by heating the bed to a temperature above the boiling point of the titanium tetrachloride-containing feedstock.

12. The process of claim 1 in which the activated carbon bed is regenerated by heating the bed to a temperature of about 140°C or greater.

13. The process of claim 1 in which the activated carbon bed is regenerated by heating the bed to a temperature of about 200°C or greater.

14. The process of claim 11 in which the bed is contacted with a dry inert gas selected from the group consisting of nitrogen or argon or a combination thereof.

15. The process of claim 1 in which the activated carbon is in a first bed and a second bed, the impurity being detected before the second bed, and the flow of titanium chloride-containing feedstock to the first bed is interrupted for regenerating the first bed while continuing the flow of feedstock to the second bed.

16. The process of claim 1 in which the tracker species is carbonyl sulfide.

17. The process of claim 1 in which the tracker species is carbon disulfide.

18. The process of claim 1 in which the tracker species is phosgene.

19. The process of claim 1 in which the tracker species is sulfur dioxide.

20. The process of claim 1 in which the tracker species is carbon dioxide.

21. The process of claim 1 in which the impurity is selected from arsenic, vanadium and antimony and compounds containing any of the foregoing elements.

## Patentansprüche

1. Verfahren zur Reinigung von Titanchlorid enthaltendem Ausgangsmaterial unter Anwendung eines Aktivkohlebetts, umfassend:
(a) das Bereitstellen des Titanchlorid enthaltenden Ausgangsmaterials umfassend eine Verunreinigung und mindestens eine Aufspürerspezies ausgewählt aus der Gruppe bestehend aus Phosgen, Carbonylsulfid, Schwefeldioxid, Kohlendisulfid, Thionylchlorid, Schwefelchlorid, SO₂Cl₂, Kohlendioxid und Salzsäure und Kombinationen davon; -
(b) das Hinzuspeisen des Titanchlorid enthaltenden Ausgangsmaterials zu dem Aktivkohlebett;
(c) das Kontaktieren des Titanchlorid enthaltenden Ausgangsmaterials mit der Aktivkohle durch Strömenlassen des Ausgangsmaterials durch das Aktivkohlebett, um mindestens einen Anteil sowohl der Aufspürerspezies als auch der Verunreinigung aus dem Ausgangsmaterial zu entfernen, um ein behandeltes Produkt zu bilden;
(d) das Kontinuieren des Strömenlassens des Titanchlorid enthaltenden Ausgangsmaterials zumindest bis die Aufspürerspezies in dem behandelten Produkt erfasst wird;
(e) das Regenerieren des Aktivkohlebetts.

2. Verfahren nach Anspruch 1, wobei das Titanchlorid enthaltende Ausgangsmaterial aus einer Reaktion von Titandioxiderz und Chlor zur Bildung eines gasförmigen Produkts, das verflüssig wird, derivatisiert wird.

3. Verfahren nach Anspruch 1, wobei die Aufspürerspezies durch Infrarotspektroskopie erfasst wird.

4. Verfahren nach Anspruch 1, wobei die Aufspürerspezies durch FRIR erfasst wird.

5. Verfahren nach Anspruch 1, wobei die Verunreinigung Arsen umfasst.

6. Verfahren nach Anspruch 1, wobei das Titanchlorid enthaltende Ausgangsmaterial weniger als etwa 10 ppm Arsen oder 25 ppm Arsentrichlorid enthält.

7. Verfahren nach Anspruch 1, wobei das behandelte Produkt weniger als etwa 1 ppm Arsen oder weniger als etwa 2,4 ppm Arsentrichlorid enthält.

8. Verfahren nach Anspruch 1, wobei die Strömung von Titantetrachlorid enthaltendem Ausgangsmaterial bis zur Desorption der Aufspürerspezies weitergeführt wird.

9. Verfahren nach Anspruch 1, wobei die Strömung von Titantetrachlorid enthaltendem Ausgangsmaterial weitergeführt wird, bis das Niveau der Aufspürerspezies in dem behandelten Produkt 50 % oder mehr als das Niveau der Aufspürerspezies in dem Ausgangsmaterial beträgt.

10. Verfahren nach Anspruch 1, wobei die Strömung von Titantetrachlorid enthaltendem Ausgangsmaterial weitergeführt wird, bis das Niveau der Aufspürerspezies in dem behandelten Produkt 1 % oder mehr als das Niveau der Aufspürspezies in dem Ausgangsmaterial beträgt.

11. Verfahren nach Anspruch 1, wobei das Aktivkohlebett durch Erhitzen des Betts auf eine Temperatur über dem Siedepunkt des Titantetrachlorid enthaltenden Ausgangsmaterials regeneriert wird.

12. Verfahren nach Anspruch 1, wobei das Aktivkohlebett durch Erhitzen des Betts auf eine Temperatur von etwa 140 °C oder mehr regeneriert wird.

13. Verfahren nach Anspruch 1, wobei das Aktivkohlebett durch Erhitzen des Betts auf eine Temperatur von etwa 200 °C oder mehr regeneriert wird.

14. Verfahren nach Anspruch 11, wobei das Bett mit einem trockenen inerten Gas kontaktiert wird ausgewählt aus der Gruppe bestehend aus Stickstoff oder Argon oder einer Kombination davon.

15. Verfahren nach Anspruch 1, wobei die Aktivkohle sich in einem ersten Bett und einem zweiten Bett befindet, wobei die Verunreinigung vor dem zweiten Bett erfasst wird und die Strömung von Titanchlorid enthaltendem Ausgangsmaterial zu dem ersten Bett zum Regenerieren des ersten Betts unterbrochen wird, während die Strömung von Ausgangsmaterial zum zweiten Bett fortgesetzt wird.

16. Verfahren nach Anspruch 1, wobei die Aufspürerspezies Carbonylsulfid ist.

17. Verfahren nach Anspruch 1, wobei die Aufspürerspezies Carbonyldisulfid ist.

18. Verfahren nach Anspruch 1, wobei die Aufspürerspezies Phosgen ist.

19. Verfahren nach Anspruch 1, wobei die Aufspürerspezies Schwefeldioxid ist.

20. Verfahren nach Anspruch 1, wobei die Aufspürerspezies Kohlendioxid ist.

21. Verfahren nach Anspruch 1, wobei die Verunreinigung ausgewählt wird unter Arsen, Vanadium und Antimon und Verbindungen, die irgendeines der obigen Elemente enthalten.

## Revendications

1. Procédé pour la purification d'une charge d'alimentation contenant du chlorure de titane en utilisant un lit de charbon actif, comprenant:
(a) la fourniture de la charge d'alimentation contenant du chlorure de titane comprenant une impureté et au moins une espèce suiveuse choisie dans le groupe constitué de phosgène, de sulfure de carbonyle, de dioxyde de soufre, de disulfure de carbone, de chlorure de thionyle, de chlorure de soufre, de SO₂Cl₂, de dioxyde de carbone et d'acide chlorhydrique et de combinaisons de ceux-ci;
(b) l'alimentation de la charge d'alimentation contenant du chlorure de titane vers le lit de charbon actif;
(c) la mise en contact de la charge d'alimentation contenant du chlorure de titane avec le charbon actif en faisant circuler la charge d'alimentation à travers le lit de charbon actif pour retirer au moins une portion à la fois de l'espèce suiveuse et de l'impureté à partir de la charge d'alimentation pour former un produit traité;
(d) la poursuite de la circulation de la charge d'alimentation contenant du chlorure de titane au moins jusqu'à ce que l'espèce suiveuse soit détectée dans le produit traité; et
(e) la régénération du lit de charbon actif.

2. Procédé selon la revendication 1, dans lequel la charge d'alimentation contenant du chlorure de titane est dérivée d'une réaction de minerai de dioxyde de titane et de chlore pour former un produit gazeux qui est liquéfié.

3. Procédé selon la revendication 1, dans lequel l'espèce suiveuse est détectée par une spectroscopie infrarouge.

4. Procédé selon la revendication 1, dans lequel l'espèce suiveuse est détectée par FTIR.

5. Procédé selon la revendication 1, dans lequel l'impureté comprend de l'arsenic.

6. Procédé selon la revendication 1, dans lequel la charge d'alimentation contenant du chlorure de titane contient moins d'environ 10 ppm d'arsenic ou 25 ppm de trichlorure d'arsenic.

7. Procédé selon la revendication 1, dans lequel le produit traité contient moins d'environ 1 ppm d'arsenic ou moins d'environ 2,4 ppm de trichlorure d'arsenic.

8. Procédé selon la revendication 1, dans lequel la circulation de la charge d'alimentation contenant du tétrachlorure de titane est poursuivie jusqu'à la désorption de l'espèce suiveuse.

9. Procédé selon la revendication 1, dans lequel la circulation de la charge d'alimentation contenant du tétrachlorure de titane est poursuivie jusqu'à ce que le niveau suiveuse dans la charge d'alimentation.

10. Procédé selon la revendication 1, dans lequel la circulation de la charge d'alimentation contenant du tétrachlorure de titane est poursuivie jusqu'à ce que le niveau de l'espèce suiveuse dans le produit traité soit de 1 % ou supérieur au niveau de l'espèce suiveuse dans la charge d'alimentation.

11. Procédé selon la revendication 1, dans lequel le lit de charbon actif est régénéré en chauffant le lit à une température au-dessus du point d'ébullition de la charge d'alimentation contenant du tétrachlorure de titane.

12. Procédé selon la revendication 1, dans lequel le lit de charbon actif est régénéré en chauffant le lit à une température d'environ 140°C ou plus.

13. Procédé selon la revendication 1, dans lequel le lit de charbon actif est régénéré en chauffant le lit à une température d'environ 200°C ou plus.

14. Procédé selon la revendication 11, dans lequel le lit est mis en contact avec un gaz inerte sec choisi dans le groupe constitué d'azote ou d'argon ou d'une combinaison de ceux-ci.

15. Procédé selon la revendication 1, dans lequel le charbon actif est dans un premier lit et un deuxième lit, l'impureté étant détectée avant le deuxième lit et la circulation de la charge d'alimentation contenant du chlorure de titane vers le premier lit est interrompue pour régénérer le premier lit tout en poursuivant la circulation de la charge d'alimentation vers le deuxième lit.

16. Procédé selon la revendication 1, dans lequel l'espèce suiveuse est le sulfure de carbonyle.

17. Procédé selon la revendication 1, dans lequel l'espèce suiveuse est le disulfure de carbone.

18. Procédé selon la revendication 1, dans lequel l'espèce suiveuse est le phosgène.

19. Procédé selon la revendication 1, dans lequel l'espèce suiveuse est le dioxyde de soufre.

20. Procédé selon la revendication 1, dans lequel l'espèce suiveuse est le dioxyde de carbone.

21. Procédé selon la revendication 1, dans lequel l'impureté est choisie parmi l'arsenic, le vanadium et l'antimoine et des composés contenant n'importe lequel des éléments qui précèdent.
